# EUROPEAN PATENT APPLICATION

(11) **EP 4 506 804 A1**
(43) Date of publication of application: **12.02.2025**
(21) Application number: 23834680.3
(22) Date of filing: 28.06.2023
(51) Int. Cl.: G06F 3/04847, G06F 3/14, G06F 9/451

(54) **INFORMATION DISPLAY METHOD AND APPARATUS, AND ELECTRONIC DEVICE AND STORAGE MEDIUM**

(30) Priority: 08.07.2022 CN 202210815486
(71) Applicant: Beijing Zitiao Network Technology Co., Ltd., Beijing 100190 (CN)
(72) Inventor: WAN, Shiqi, Beijing 100028 (CN); XU, Chuan, Beijing 100028 (CN); ZHANG, Nuomeng, Beijing 100028 (CN)
(74) Representative: Dentons UK and Middle East LLP
(86) International application number: PCT/CN2023/103204
(87) International publication number: WO 2024/007912

(57) **Abstract**

Disclosed in the embodiments of the present disclosure are an information display method and apparatus, and an electronic device and a storage medium. The method comprises: displaying a content display page on a preset application, and displaying a preset sub-interface on an upper layer of the content display page, the preset sub-interface being used for prompting a user, wherein associated information of first media content is displayed in the preset sub-interface, and the first media content is associated with a preset content type; and in response to a trigger operation, which acts on the preset sub-interface, displaying the first media content corresponding to the associated information.

## Description

### CROSS-REFERENCE TO RELATED APPLICATIONS

The present application is based on and claims priority to the Chinese Patent Application No. 202210815486.9 filed on July 8, 2022, the disclosure of which is incorporated by reference herein in its entirety.

### TECHNICAL FIELD

The present disclosure relates to the field of information technology, and particularly to an information display method and apparatus, an electronic device and a storage medium.

### BACKGROUND

With the rapid development of network technology and terminal technology, channels for users to acquire information are increasingly abundant. Therefore, how to improve the efficiency and experience of acquiring information by users is a direction that each application client tries to optimize all the time.

### SUMMARY

In order to solve the above technical problem or at least partially solve the above technical problem, embodiments of the present disclosure provide an information display method and apparatus, an electronic device, and a storage medium, so as to conveniently display associated information of first media content, facilitating users to quickly know about media content information related to a preset content type, improving efficiency of acquiring information by users, and improving a prompt effect of a preset sub-interface.

An embodiment of the present disclosure provides an information display method, comprising:
displaying a content presentation page on a preset application, and displaying a preset sub-interface on an upper layer of the content presentation page, the preset sub-interface being configured for prompting a user; wherein, associated information of first media content is displayed in the preset sub-interface, and the first media content is associated with a preset content type; and
in response to a trigger operation on the preset sub-interface, displaying the first media content corresponding to the associated information.

An embodiment of the present disclosure further provides an information display apparatus, comprising:
a first display module, configured to display a content presentation page on a preset application, and display a preset sub-interface on an upper layer of the content presentation page, the preset sub-interface being configured for prompting a user; wherein, associated information of first media content is displayed in the preset sub-interface, and the first media content is associated with a preset content type; and
a second display module, configured to, in response to a trigger operation on the preset sub-interface, display the first media content corresponding to the associated information.

An embodiment of the present disclosure further provides an electronic device, comprising:
one or more processors;
storage means configured to store one or more programs;
the one or more programs, when executed by the one or more processors, causing the one or more processors to implement the information display method as described above.

An embodiment of the present disclosure further provides a computer-readable storage medium having thereon stored a computer program, which, when executed by a processor, implements the information display method as described above.

An embodiment of the present disclosure further provides a computer program product, comprising: instructions which, when executed by a processor, implement the information display method as described above.

An embodiment of the present disclosure further provides a computer program, comprising: instructions which, when executed by a processor, implement the information display method as described above.

### BRIEF DESCRIPTION OF THE DRAWINGS

The above and other features, advantages, and aspects of the embodiments of the present disclosure will become more apparent in conjunction with the accompanying drawings and with reference to the following DETAILED DESCRIPTION. Throughout the drawings, identical or similar reference numbers refer to identical or similar elements. It should be understood that the drawings are schematic and that components and elements are not necessarily drawn to scale.
Fig. 1 is a flowchart of an information display method in an embodiment of the present disclosure;
Fig. 2 is a schematic diagram of a content presentation page comprising a preset sub-interface in an embodiment of the present disclosure;
Fig. 3 is a schematic diagram of a content presentation page comprising a preset sub-interface in an embodiment of the present disclosure;
Fig. 4 is a schematic diagram of a preset label page in an embodiment of the present disclosure;
Fig. 5 is a schematic diagram of a content presentation page comprising a preset sub-interface in an embodiment of the present disclosure;
Fig. 6 is a schematic diagram of a content presentation page comprising a preset sub-interface in an embodiment of the present disclosure;
Fig. 7 is a schematic diagram of a content presentation page comprising a preset sub-interface in an embodiment of the present disclosure;
Fig. 8 is a schematic structural diagram of an information display apparatus in an embodiment of the present disclosure;
Fig. 9 is a schematic structural diagram of an electronic device in an embodiment of the present disclosure.

### DETAILED DESCRIPTION

The embodiments of the present disclosure will be described in more detail below with reference to the accompanying drawings. While certain embodiments of the present disclosure are shown in the drawings, it should be understood that the present disclosure may be implemented in various forms and should not be construed as limited to the embodiments set forth herein, but rather, these embodiments are provided for a more complete and thorough understanding of the present disclosure. It should be understood that the drawings and the embodiments of the present disclosure are for exemplary purposes only and are not intended to limit the protection scope of the present disclosure.

It should be understood that various steps recited in method embodiments of the present disclosure may be performed in a different order, and/or performed in parallel. Moreover, the method embodiments may comprise additional steps and/or omit performing the illustrated steps. The scope of the present disclosure is not limited in this respect.

The term "comprising" and variations thereof used herein are intended to be open-ended, i.e., "comprising but not limited to". The term "based on" is "at least partially based on". The term "one embodiment" means "at least one embodiment"; the term "another embodiment" means "at least one other embodiment"; the term "some embodiments" means "at least some embodiments". Relevant definitions for other terms will be given in the following description.

It should be noted that the concepts of "first", "second", and the like mentioned in the present disclosure are only used for distinguishing different devices, modules or units, and are not used for limiting the order or interdependence of functions performed by the devices, modules or units.

It should be noted that modifications of "one", "plurality" mentioned in this disclosure are intended to be illustrative rather than restrictive, and that those skilled in the art should appreciate that they should be understood as "one or more" unless otherwise explicitly stated in the context.

Names of messages or information exchanged between a plurality of devices in the embodiments of the present disclosure are for illustrative purposes only, and are not intended to limit the scope of the messages or information.

Compared with the related art, the technical solution provided by the embodiment of the present disclosure has the following advantages.

The information display method provided by the embodiment of the present disclosure, comprises: when displaying a content presentation page on a preset application, displaying a preset sub-interface on an upper layer of the content presentation page, the preset sub-interface being configured for prompting a user; wherein, associated information of first media content is displayed in the preset sub-interface, and the first media content is associated with a preset content type, i.e., when displaying the content presentation page on the preset application, conveniently displaying the associated information of the first media content by means of the preset sub-interface on the upper layer of the content presentation page; and in response to a trigger operation on the preset sub-interface, displaying the first media content corresponding to the associated information, facilitating the user to know about the media content information related to the preset content type quickly, improving the efficiency of acquiring information by the user, and improving the prompt effect of the preset sub-interface.

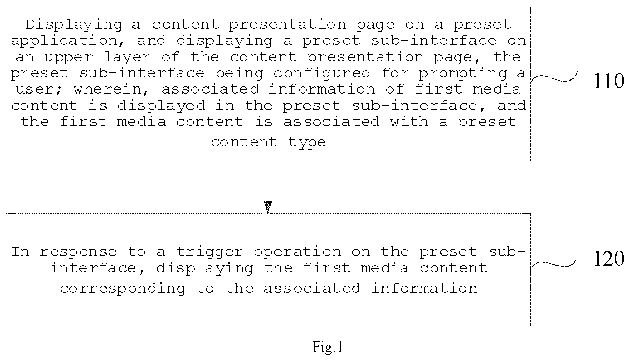

Fig. 1 is a flowchart of an information display method in an embodiment of the present disclosure, where the method may be performed by an information display apparatus, and the apparatus may be implemented in software and/or hardware, and the apparatus may be configured in an electronic device, such as a terminal, specifically including but not limited to a smart phone, a palm computer, a tablet computer, a wearable device with a display screen, a desktop computer, a notebook computer, an all-in-one machine, a smart home device and the like.

As shown in Fig. 1, the method specifically comprises the following steps:
step 110, displaying a content presentation page on a preset application, and displaying a preset sub-interface on an upper layer of the content presentation page, the preset sub-interface being configured for prompting a user; wherein, associated information of first media content is displayed in the preset sub-interface, and the first media content is associated with a preset content type.

The preset application may be an audio/video related application, for example, an application for playing a video stream; other types of applications are also possible, and the present disclosure is not limited thereto.

The content presentation page is a media content page displayed by the preset application, and may be, for example, a page displayed when the preset application starts, and may also be referred to as a home page of the preset application.

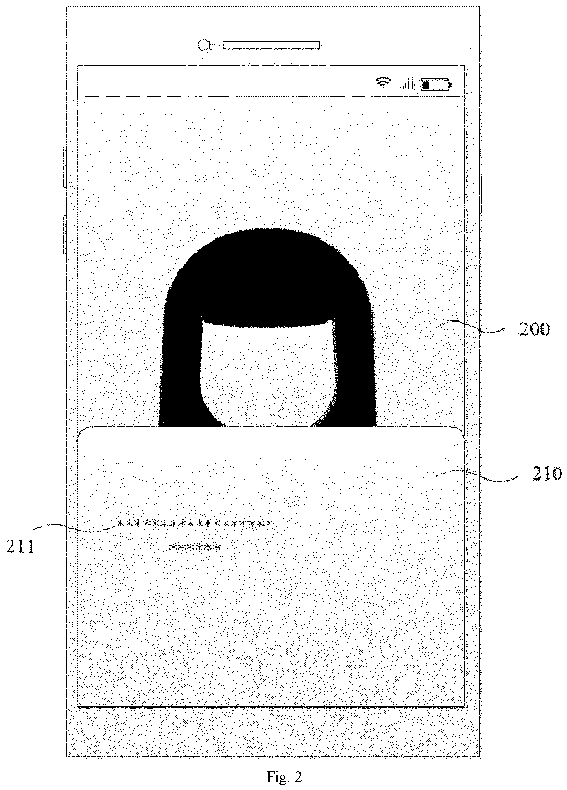

In some embodiments, in order to better help a user to quickly know about media content information related to a preset content type, a preset sub-interface is displayed on an upper layer of the content presentation page in an overlapping manner, the preset sub-interface is smaller than the content presentation page, and the preset sub-interface is displayed on the upper layer of a middle area of the content presentation page or on the upper layer of a bottom area of the content presentation page. Illustratively, the preset sub-interface may be displayed in the form of a pop-up window displayed on the upper layer of the content presentation page. Referring to Fig. 2, a schematic diagram of a content presentation page comprising a preset sub-interface is shown, in which a preset sub-interface 210 is displayed in the form of a pop-up window on an upper layer of a content presentation page 200. In the preset sub-interface 210, associated information 211 of first media content is displayed, and the first media content is associated with a preset content type, or the content type of the first media content belongs to the preset content type; in other words, the first media content is a media resource of a defined content type. In some embodiments, the associated information of the first media content includes pictures and/or text of media content of a preset theme, and the preset theme is a theme associated with the preset content type, for example, the preset content type is "encyclopedia", and the preset theme may be "space mystery", "earth mystery", or "wind power generation", or the like. If the preset theme may be "space mystery", the associated information of the first media content may specifically include a space picture presented as a background of the preset sub-interface and/or text about space. For another example, the associated information of the first media content may be a title, a summary of the first media content, or at least one frame of image of the first media content.

In some embodiments, if a starting operation of the preset application is triggered at different times, the associated information of the first media content displayed on the preset sub-interface is different, that is, the associated information of the first media content seen by the user when the user enters the preset application at different times is different, so that the purpose of displaying different associated information to the user at different times is achieved, and the richness of the associated information acquired by the user is improved.

Further, the preset sub-interface 210 is used for prompting the user, and in some embodiments, the preset sub-interface 210 is used for prompting the user whether to enter a setting mode of the preset application. The setting mode may be a mode that limits the content type of the content displayed by the preset application, that is, if the user enters the setting mode, only content information of a specific content type may be displayed through the preset application; in other words, the user can only acquire the content information of the specific content type through the preset application. By limiting the content type of the content displayed by the preset application, personalized requirements of different user groups can be met. In general, the setting mode is a mode in which the preset application enters a mode of playing a video of a preset content type. For example, when the setting mode is a teenager mode, the application will provide content of a preset type, such as learning related content or campus related content. In addition, in the setting mode, the application may be automatically closed when a running duration of the application reaches a set duration, or when a duration of the user using the preset application reaches the set duration. By limiting the total duration of continuous use of the preset application by the user, the purpose of protecting the eyesight of the user can be achieved, meanwhile, the user is prompted to develop a good habit of reasonably distributing time, and the use experience of the user can be improved.

In summary, by displaying the preset sub-interface in an overlapping manner on the content presentation page of the preset application, the user is facilitated to quickly know about the media content information related to the preset content type, improving the efficiency of acquiring information by the user, and improving the prompt effect of the preset sub-interface.

Step 120, in response to a trigger operation on the preset sub-interface, displaying the first media content corresponding to the associated information.

The first media content may be media content detail information related to the associated information. For example, the associated information is encyclopedia information "unknown planet in the solar system", and the first media content may be video content about the unknown planet in the solar system.

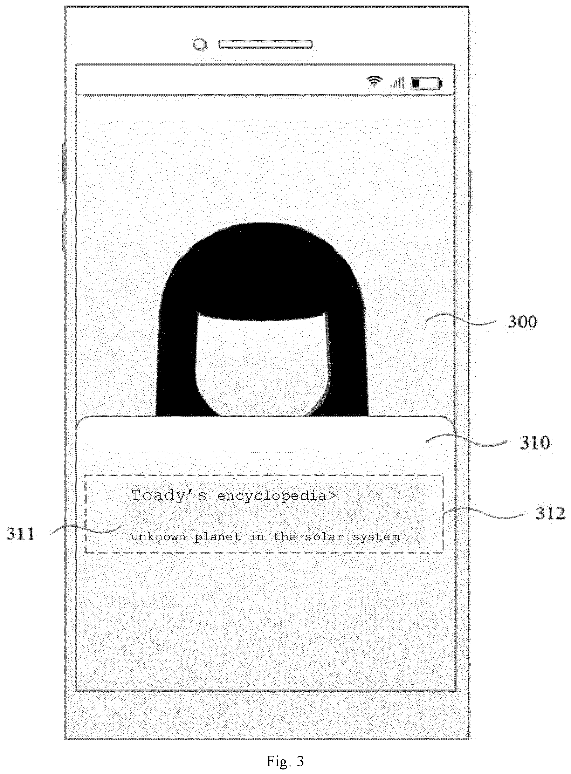

Specifically, referring to a schematic diagram of a content presentation page comprising a preset sub-interface as shown in Fig. 3, a preset sub-interface 310 is displayed in the form of a pop-up window on an upper layer of a content presentation page 300. The preset sub-interface 310 is displayed with associated information 311 of first media content, which specifically is "an unknown planet in the solar system", and if a specified area 312 of the preset sub-interface 310 is triggered or the associated information 311 is triggered, a detail page of the first media content is displayed.

In some implementations, after displaying the detail page of the first media content, the method further comprises: in response to an operation of swiping the detail page in a first preset direction, closing the detail page, and restoring displaying the content presentation page comprising the preset sub-interface. The first preset direction may be from top to bottom, that is, the user swiping the detail page down may close the detail page and return to a previous page.

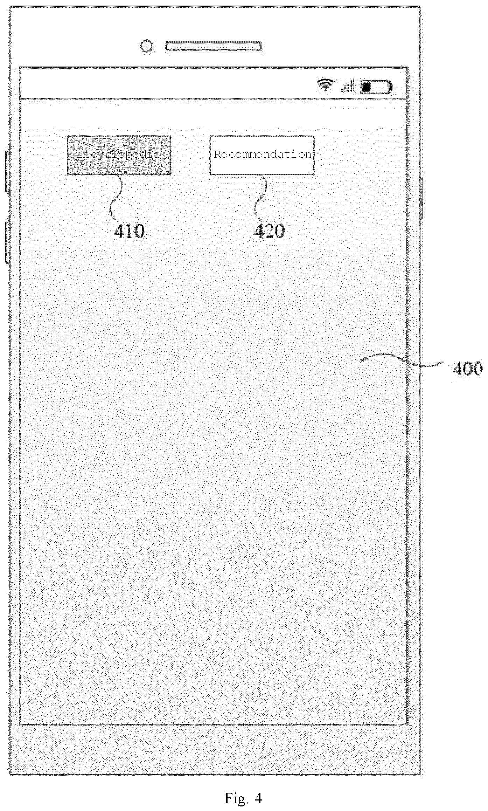

In some embodiments, said displaying the detail page of the first media content, comprises:
displaying the detail page of the first media content on a preset label page corresponding to the preset content type, wherein the preset label page is a page for displaying a first media stream of the preset content type, the first media stream comprises the first media content, and the preset label corresponds to the preset content type, that is, only media content belonging to the preset content type is displayed on the preset label page, and by adding preset labels to classify different types of media content, the user can enter the display page of the media content of a target type by switching the labels, thereby improving the efficiency and the interaction experience of obtaining the media content of the target type. In the application, a plurality of preset label pages may be included, each presenting different types of content, for example, the preset label pages of the application may include a recommendation page, a focus page, a city page, and the like. Taking an example that the preset label page corresponding to the preset content type is an "encyclopedia" label page, referring to a schematic diagram of a preset label page shown in Fig. 4, preset labels respectively corresponding to the preset content types are displayed on the top of a page 400, for example, an "encyclopedia" label 410 and a "recommendation" label 420; media content displayed on the page of the "encyclopedia" label 410 belongs to the "encyclopedia" type, for example, astronomy, geography, or the like; the type of media content displayed on the page of the "recommendation" label 420 is content recommended to the user, and may be of the "encyclopedia" type, as well as of the literature type, such as dance-related media content.

Further, the method further comprises: in response to an operation of swiping the detail page in a second preset direction, displaying a detail page of second media content in the first media stream on the preset label page. The content types of the second media content and the first media content both belong to the preset content type, for example, the preset content type is "encyclopedia", the first media content may be content about a planet in the solar system, the second media content may be content about how a rainbow is generated, and both belong to content of the encyclopedia type.

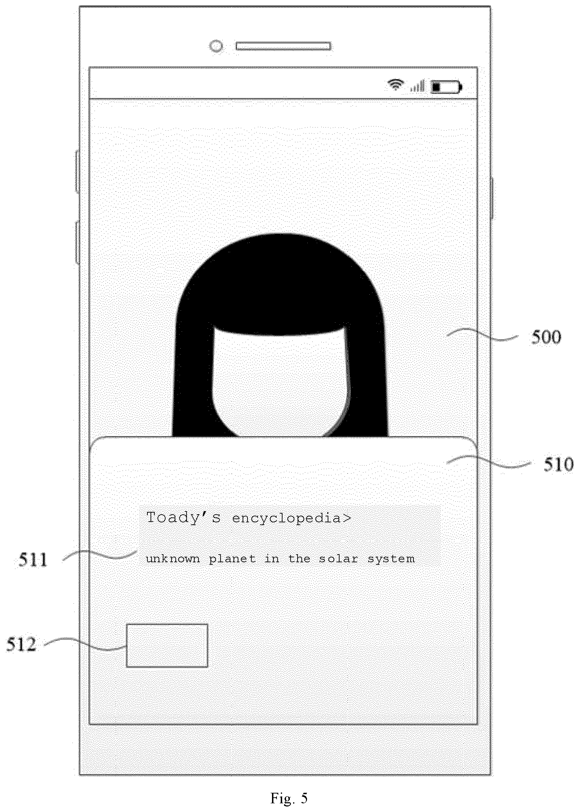

In some embodiments, referring to a schematic diagram of a content presentation page comprising a preset sub-interface as shown in Fig. 5, a preset sub-interface 510 is displayed on an upper layer of a content presentation page 500, and the preset sub-interface 510 is displayed with associated information 511 of first media content, which specifically is "unknown planet in the solar system", and a first control 512 is further displayed in the preset sub-interface 510; the method further comprises: in response to a trigger operation on the first control 512, closing the preset sub-interface 510, and playing a second media stream on the content presentation page 500, wherein the second media stream may or may not include the first media content. Illustratively, the second media stream is media content pushed to the preset application to be displayed and played based on a set rule.

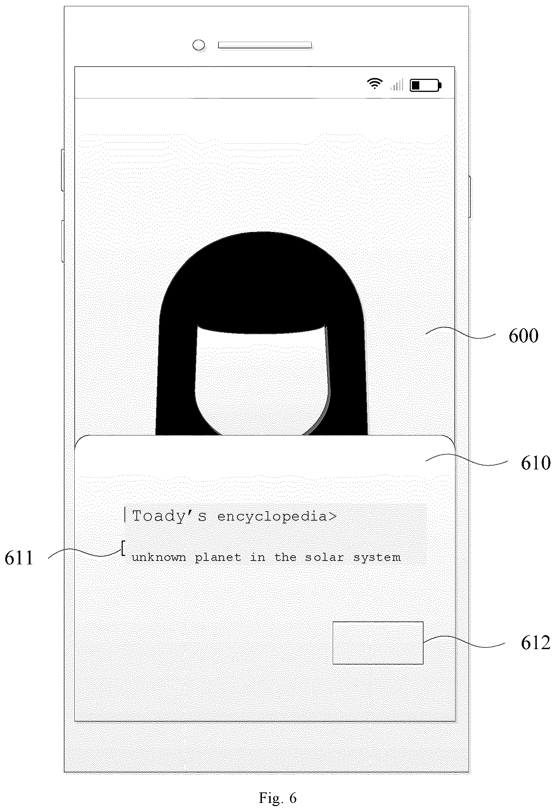

In some implementations, referring to a schematic diagram of a content presentation page comprising a preset sub-interface shown in Fig. 6, a preset sub-interface 610 is displayed on an upper layer of a content presentation page 600, and the preset sub-interface 610 is displayed with associated information 611 of first media content, which specifically is "unknown planet in the solar system", and a second control 612 is displayed in the preset sub-interface 610, for enabling the preset application to enter a setting mode; the method further comprises: in response to a trigger operation on the second control 612, displaying an intermediate page, in which an initiate control of the setting mode and associated information of a plurality of media content are displayed, where the associated information of the plurality of media content includes the associated information of the first media content. The method further comprises: in response to a trigger operation on the initiate control, displaying a third media stream, wherein the third media stream comprises media content respectively corresponding to the associated information of the plurality of media content. In summary, by triggering the second control 612, the intermediate page is entered, for the user to confirm again whether to enter the setting mode of the preset application, and if the user confirms to enter the setting mode of the preset application, the user can enter the setting mode by triggering the initiate control on the intermediate page.

In some embodiments, the second control in the preset sub-interface may also be an initiate control; the method further comprises: in response to a trigger operation on the initiate control, displaying a fourth media stream, the fourth media stream comprising the first media content. Namely, the setting mode of the preset application can be directly entered without the intermediate page.

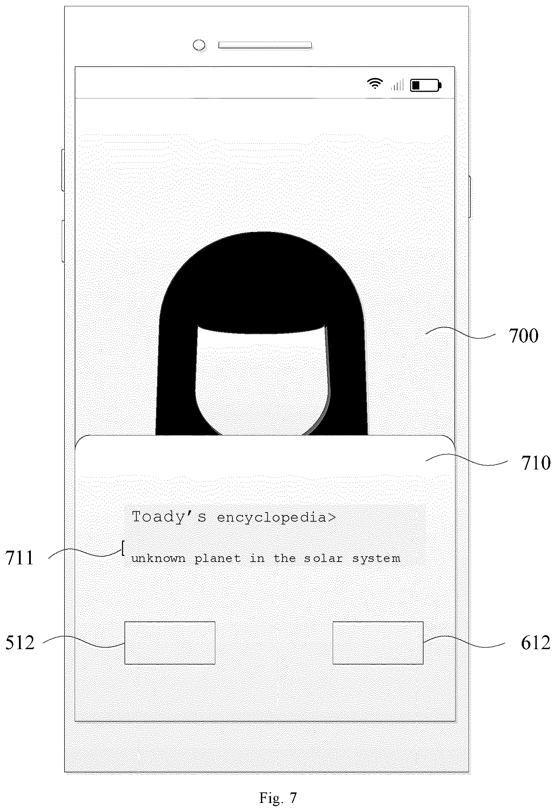

It is understood that, in some implementations, the first control 512 and the second control 612 may be simultaneously displayed on the preset sub-interface, and referring to a schematic diagram of a content presentation page comprising a preset sub-interface as shown in Fig. 7, a preset sub-interface 710 is displayed on an upper layer of a content presentation page 700, and the preset sub-interface 710 is displayed with associated information 711 of the first media content, which specifically is "unknown planet in the solar system", and the first control 512 and the second control 612 are displayed in the preset sub-interface 710. If the user triggers the first control 512, the preset sub-interface 710 may be closed, and a second media stream may be played on the content presentation page 700, where the second media stream may or may not include the first media content. If the user triggers the second control 612, an intermediate page is displayed or a fourth media stream is displayed, the fourth media stream including the first media content. If the intermediate page is displayed when the user triggers the second control 612, an initiate control of the setting mode and associated information of a plurality of media content are displayed on the intermediate page, the associated information of the plurality of media content including the associated information of the first media content. Further, when the user triggers the initiate control on the middle page, display of a third media stream may be triggered, the third media stream including media content corresponding to the associated information of the plurality of media content, respectively.

Illustratively, the first media stream, the second media stream, the third media stream, and the fourth media stream may be immersive single-column media content streams, and the user may switch the media content displayed on the display screen by means of a swipe up/down operation. The first media stream, the third media stream and the fourth media stream are all media streams associated with the preset content type.

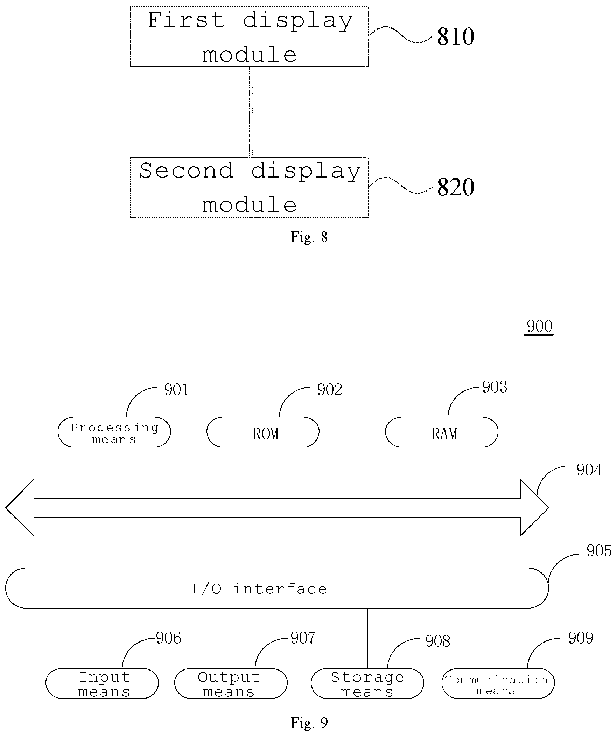

Fig. 8 is a schematic structural diagram of an information display apparatus in an embodiment of the present disclosure. The apparatus specifically comprises: a first display module 810 and a second display module 820. The first display module 810 is configured to display a content presentation page on a preset application, and display a preset sub-interface on an upper layer of the content presentation page, the preset sub-interface being configured for prompting a user; wherein, associated information of first media content is displayed in the preset sub-interface, and the first media content is associated with a preset content type; and the second display module 820 is configured to, in response to a trigger operation on the preset sub-interface, display the first media content corresponding to the associated information.

In some embodiments, the preset sub-interface being configured for prompting the user, comprises:
the preset sub-interface being configured for prompting the user whether to enter a setting mode of the preset application, the setting mode being a mode that the preset application enters to play media content of the preset content type.

In some embodiments, the second display module 820 comprises: a first display unit configured to, in response to a trigger operation on a predetermined area of the preset sub-interface or on the associated information, display a detail page of the first media content.

In some embodiments, the first display module 810 is further configured to: after the displaying the detail page of the first media content, in response to an operation of swiping the detail page in a first preset direction, close the detail page, and restore displaying the content presentation page comprising the preset sub-interface.

In some embodiments, the first display unit is specifically configured to: display the detail page of the first media content on a preset label page corresponding to the preset content type, the preset label page being configured for presenting a first media stream of the preset content type, and the first media stream comprising the first media content.

In some embodiments, the first display unit is further configured to: in response to an operation of swiping the detail page in a second preset direction, display a detail page of second media content in the first media stream on the preset label page.

In some embodiments, a first control is displayed on the preset sub-interface; the first display module 810 is further configured to: in response to a trigger operation in the first control, close the preset sub-interface, and play a second media stream on the content presentation page.

In some embodiments, a second control is displayed in the preset sub-interface, the second control being configured for enabling the preset application to enter a setting mode.

In some embodiments, the first display module 810 includes a second display unit configured to, in response to a trigger operation on the second control, display an intermediate page in which an initiate control of the setting mode and associated information of a plurality of media content are displayed, the associated information of the plurality of media content comprising the associated information of the first media content.

In some embodiments, the first display module 810 comprises a third display unit configured to, in response to a trigger operation on the initiate control, display a third media stream, the third media stream comprising media content corresponding to the associated information of the plurality of media content, respectively.

In some embodiments, the second control is an initiate control;
the second display unit is further configured to, in response to a trigger operation on the initiate control, display a fourth media stream, the fourth media stream comprising the first media content.

In some embodiments, the preset sub-interface is a pop-up window displayed on the upper layer of the content presentation page; and/or the associated information of the first media content comprises pictures and/or text of media content of a preset theme.

In some embodiments, if a starting operation of the preset application is triggered at different times, the associated information of the first media content displayed on the preset sub-interface is different.

The modules described above may be implemented as software components executing on one or more general-purpose processors, or may be implemented as hardware for performing certain functions, such as programmable logic devices and/or application specific integrated circuits. In some embodiments, the modules may be embodied in the form of a software product, which may be stored in a non-volatile storage medium. The non-volatile storage medium includes instructions to cause a computer device (e.g., a personal computer, server, network device, mobile terminal, etc.)to perform the method described in the embodiment of the present disclosure. In some embodiments, the modules described above may also be implemented on a single device or may be distributed across multiple devices. The functions of these modules may be combined with each other, or further divided into a plurality of sub-modules.

The information display apparatus provided by the embodiment of the present disclosure can perform the steps in the information display method provided by the method embodiment of the present disclosure, and has beneficial effects of performing the steps, which is not repeated here.

Fig. 9 is a schematic structural diagram of an electronic device according to an embodiment of the present disclosure. Reference is made below to Fig. 9, which shows a schematic structural diagram of an electronic device 900 suitable for implementing the embodiments of the present disclosure. The electronic device 900 in the embodiments of the present disclosure may include, but is not limited to, a mobile terminal such as a mobile phone, a notebook computer, a digital broadcast receiver, a PDA (Personal Digital Assistant), a PAD (Tablet Computer), a PMP (Portable Multimedia Player), a vehicle-mounted terminal (for example, a vehicle-mounted navigation terminal), a wearable electronic device or the like, and a fixed terminal such as a digital TV, a desktop computer, a smart home device or the like. The electronic device shown in Fig. 9 is only an example and should not bring any limitation to the functions and the scope of use of the embodiments of the present disclosure.

As shown in Fig. 9, the electronic device 900 may comprise a processing means (for example, a central processing unit, a graphics processing unit, etc.) 901 that may perform various appropriate actions and processes according to a program stored in a read-only memory (ROM) 902 or a program loaded from a storage means 908 into a random access memory (RAM) 903, to implement the method in embodiments as described in the disclosure. In the RAM 903, various programs and data necessary for the operation of the electronic device 900 are also stored. The processing means 901, the ROM 902, and the RAM 903 are connected to each other via a bus 904. An input/output (I/O) interface 905 is also connected to the bus 904.

Generally, the following means may be connected to the I/O interface 905: an input means 906 including, for example, a touch screen, touch pad, keyboard, mouse, camera, microphone, accelerometer, gyroscope, etc.; an output means 907 including, for example, a liquid crystal display (LCD), speaker, vibrator, etc.; the storage means 908 including, for example, a magnetic tape, hard disk, etc.; and a communication means 909. The communication means 909 may allow the electronic device 900 to communicate wirelessly or by wire with other devices to exchange data. While the electronic device 900 having the various means is shown in Fig. 9, it should be understood that not all illustrated means are required to be implemented or provided. More or fewer means may be alternatively implemented or provided.

In particular, according to the embodiment of the present disclosure, the processes described above with reference to the flow diagrams may be implemented as a computer software program. For example, the embodiments of the present disclosure comprise a computer program product which comprises a computer program carried on a non-transient computer-readable medium, the computer program containing program code for performing the method illustrated by the flow diagrams, thereby implementing the information display method described as above. In such an embodiment, the computer program may be downloaded from a network via the communications means 909 and installed, or installed from the storage means 908, or installed from the ROM 902. The computer program, when executed by the processing means 901, performs the above functions defined in the method of the embodiment of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may comprise, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium that can contain or store a program which can be used by or in conjunction with an instruction execution system, apparatus, or device. However, in the present disclosure, the computer-readable signal medium may comprise a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency), etc., or any suitable combination of the foregoing.

In some embodiments, a client and a server may communicate using any currently known or future developed network protocol, such as HTTP (HyperText Transfer Protocol), and may be interconnected with any form or medium of digital data communication (e.g., a communication network). Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be embodied in the above electronic device; or may exist separately without being assembled into the electronic device.

The above computer-readable medium has one or more programs carried thereon, wherein the above one or more programs, when executed by the electronic device, cause the electronic device to: display a content presentation page on a preset application, and display a preset sub-interface on an upper layer of the content presentation page, the preset sub-interface being configured for prompting a user; wherein, associated information of first media content is displayed in the preset sub-interface, and the first media content is associated with a preset content type; and in response to a trigger operation on the preset sub-interface, display the first media content corresponding to the associated information.

In some embodiments, when the above one or more programs are executed by the electronic device, the electronic device can also perform other steps described in the above embodiments.

The computer program code for performing the operations of the present disclosure may be written in one or more programming languages or a combination thereof, wherein the above programming language includes but is not limited to an object-oriented programming language such as Java, Smalltalk, C++, and includes a conventional procedural programming language, such as the "C" language or similar programming languages. The program code may be executed entirely on a user's computer, partly on a user's computer, as a stand-alone software package, partly on a user's computer and partly on a remote computer, or entirely on a remote computer or server. In a scenario where the remote computer is involved, the remote computer may be connected to the user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or portion of code, which comprises one or more executable instructions for implementing a specified logical function. It should also be noted that, in some alternative implementations, functions noted in blocks may occur in an order different from that noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of blocks in the block diagrams and/or flow diagrams, can be implemented by a special-purpose hardware-based system that performs specified functions or operations, or by a combination of special-purpose hardware and computer instructions.

The unit involved in the embodiments of the present disclosure may be implemented by software or hardware. The name of the unit does not, in some cases, constitute a limitation on the unit itself.

The functions described above herein may be executed, at least partially, by one or more hardware logic components. For example, without limitation, exemplary types of the hardware logic component that may be used include: a field programmable gate array (FPGA), application specific integrated circuit (ASIC), application specific standard product (ASSP), system on chip (SOC), complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, the present disclosure provides an information display method, comprising: displaying a content presentation page on a preset application, and displaying a preset sub-interface on an upper layer of the content presentation page, the preset sub-interface being configured for prompting a user; wherein, associated information of first media content is displayed in the preset sub-interface, and the first media content is associated with a preset content type; and in response to a trigger operation on the preset sub-interface, displaying the first media content corresponding to the associated information.

According to one or more embodiments of the present disclosure, in the information display method provided by the present disclosure, in some embodiments, the preset sub-interface being configured for prompting the user, comprises:
the preset sub-interface being configured for prompting the user whether to enter a setting mode of the preset application, the setting mode being a mode that the preset application enters to play media content of the preset content type.

According to one or more embodiments of the present disclosure, in the information display method provided by the present disclosure, in some embodiments, the in response to the trigger operation on the preset sub-interface, displaying the first media content corresponding to the associated information, comprises: in response to a trigger operation on a predetermined area of the preset sub-interface or on the associated information, displaying a detail page of the first media content.

According to one or more embodiments of the present disclosure, in the information display method provided by the present disclosure, in some embodiments, after the displaying the detail page of the first media content, the method further comprises: in response to an operation of swiping the detail page in a first preset direction, closing the detail page, and restoring displaying the content presentation page comprising the preset sub-interface.

According to one or more embodiments of the present disclosure, in the information display method provided by the present disclosure, in some embodiments, the displaying the detail page of the first media content, comprises: displaying the detail page of the first media content on a preset label page corresponding to the preset content type, the preset label page being configured for presenting a first media stream of the preset content type, and the first media stream comprising the first media content.

According to one or more embodiments of the present disclosure, in the information display method provided by the present disclosure, in some embodiments, after the displaying the detail page of the first media content on the preset label page corresponding to the preset content type, the method further comprises: in response to an operation of swiping the detail page in a second preset direction, displaying a detail page of second media content in the first media stream on the preset label page.

According to one or more embodiments of the present disclosure, in the information display method provided by the present disclosure, in some embodiments, a first control is displayed in the preset sub-interface; in response to a trigger operation on the first control, closing the preset sub-interface, and playing a second media stream on the content presentation page.

According to one or more embodiments of the present disclosure, in the information display method provided by the present disclosure, in some embodiments, a second control is displayed in the preset sub-interface, the second control being configured for enabling the preset application to enter a setting mode.

According to one or more embodiments of the present disclosure, in the information display method provided by the present disclosure, in some embodiments, the method further comprises, in response to a trigger operation on the second control, displaying an intermediate page in which an initiate control of the setting mode and associated information of a plurality of media content are displayed, the associated information of the plurality of media content comprising the associated information of the first media content.

According to one or more embodiments of the present disclosure, in the information display method provided by the present disclosure, in some embodiments, the method further comprises: in response to a trigger operation on the initiate control, displaying a third media stream, the third media stream comprising media content corresponding to the associated information of the plurality of media content, respectively.

According to one or more embodiments of the present disclosure, in the information display method provided by the present disclosure, in some embodiments, the second control is an initiate control; the method further comprises: in response to a trigger operation on the initiate control, display a fourth media stream, the fourth media stream comprising the first media content.

According to one or more embodiments of the present disclosure, in the information display method provided by the present disclosure, in some embodiments, the preset sub-interface is a pop-up window displayed on the upper layer of the content presentation page; and/or the associated information of the first media content comprises pictures and/or text of media content of a preset theme.

According to one or more embodiments of the present disclosure, in the information display method provided by the present disclosure, in some embodiments, if a starting operation of the preset application is triggered at different times, the associated information of the first media content displayed on the preset sub-interface is different.

According to one or more embodiments of the present disclosure, the present disclosure provides an information display apparatus, comprising: a first display module, configured to display a content presentation page on a preset application, and display a preset sub-interface on an upper layer of the content presentation page, the preset sub-interface being configured for prompting a user; wherein, associated information of first media content is displayed in the preset sub-interface, and the first media content is associated with a preset content type; and a second display module, configured to, in response to a trigger operation on the preset sub-interface, display the first media content corresponding to the associated information.

According to one or more embodiments of the present disclosure, the present disclosure provides an electronic device, comprising:
one or more processors;
a memory configured to store one or more programs;
the one or more programs, when executed by the one or more processors, causing the one or more processors to implement any of the information display method provided by the present disclosure.

According to one or more embodiments of the present disclosure, the present disclosure provides a computer-readable storage medium having thereon stored a computer program, which, when executed by a processor, implements any of the information display method provided by the present disclosure.

According to one or more embodiments of the present disclosure, the present disclosure provides a computer program product, comprising: instructions which, when executed by a processor, implement any of the information display method provided by the present disclosure.

According to one or more embodiments of the present disclosure, the present disclosure provides a computer program, comprising: instructions which, when executed by a processor, implement any of the information display method provided by the present disclosure.

The foregoing only describes the preferred embodiments of the present disclosure and the technical principles employed. It should be appreciated by those skilled in the art that the disclosed scope involved in the present disclosure is not limited to the technical solutions formed by specific combinations of the technical features described above, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing might be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. An information display method, comprising:
displaying a content presentation page on a preset application, and displaying a preset sub-interface on an upper layer of the content presentation page, the preset sub-interface being configured for prompting a user; wherein, associated information of first media content is displayed in the preset sub-interface, and the first media content is associated with a preset content type; and
in response to a trigger operation on the preset sub-interface, displaying the first media content corresponding to the associated information.

2. The method according to claim 1, wherein, the preset sub-interface being configured for prompting the user, comprises:
the preset sub-interface being configured for prompting the user whether to enter a setting mode of the preset application, the setting mode being a mode that the preset application enters to play media content of the preset content type.

3. The method according to claim 1 or 2, wherein, the in response to the trigger operation on the preset sub-interface, displaying the first media content corresponding to the associated information, comprises:
in response to a trigger operation on a predetermined area of the preset sub-interface or on the associated information, displaying a detail page of the first media content.

4. The method according to claim 3, wherein, after the displaying the detail page of the first media content, the method further comprises:
in response to an operation of swiping the detail page in a first preset direction, closing the detail page, and restoring displaying the content presentation page comprising the preset sub-interface.

5. The method according to claim 3 or 4, wherein, the displaying the detail page of the first media content, comprises:
displaying the detail page of the first media content on a preset label page corresponding to the preset content type, the preset label page being configured for presenting a first media stream of the preset content type, and the first media stream comprising the first media content.

6. The method according to claim 5, wherein, after the displaying the detail page of the first media content on the preset label page corresponding to the preset content type, the method further comprises:
in response to an operation of swiping the detail page in a second preset direction, displaying a detail page of second media content in the first media stream on the preset label page.

7. The method according to any of claims 1 to 6, wherein, a first control is displayed in the preset sub-interface; in response to a trigger operation on the first control, closing the preset sub-interface, and playing a second media stream on the content presentation page.

8. The method according to any of claims 1 to 7, wherein, a second control is displayed in the preset sub-interface, the second control being configured for enabling the preset application to enter a setting mode.

9. The method according to claim 8, wherein, the method further comprises:
in response to a trigger operation on the second control, displaying an intermediate page in which an initiate control of the setting mode and associated information of a plurality of media content are displayed, the associated information of the plurality of media content comprising the associated information of the first media content.

10. The method according to claim 9, wherein, the method further comprises:
in response to a trigger operation on the initiate control, displaying a third media stream, the third media stream comprising media content corresponding to the associated information of the plurality of media content, respectively.

11. The method according to claim 8, wherein, the second control is an initiate control;
the method further comprises:
in response to a trigger operation on the initiate control, display a fourth media stream, the fourth media stream comprising the first media content.

12. The method according to any of claims 1 to 11, wherein, the preset sub-interface is a pop-up window displayed on the upper layer of the content presentation page; and/or the associated information of the first media content comprises pictures and/or text of media content of a preset theme.

13. The method according to any of claims 1 to 11, wherein, if a starting operation of the preset application is triggered at different times, the associated information of the first media content displayed on the preset sub-interface is different.

14. An information display apparatus, comprising:
a first display module, configured to display a content presentation page on a preset application, and display a preset sub-interface on an upper layer of the content presentation page, the preset sub-interface being configured for prompting a user; wherein, associated information of first media content is displayed in the preset sub-interface, and the first media content is associated with a preset content type; and
a second display module, configured to, in response to a trigger operation on the preset sub-interface, display the first media content corresponding to the associated information.

15. An electronic device, comprising:
one or more processors;
storage means configured to store one or more programs;
the one or more programs, when executed by the one or more processors, causing the one or more processors to implement the method according to any of claims 1 to 13.

16. A computer-readable storage medium having thereon stored a computer program, which, when executed by a processor, implements the method according to any of claims 1 to 13.

17. A computer program product, comprising: instructions which, when executed by a processor, implement the method according to any of claims 1 to 13.

18. A computer program, comprising: instructions which, when executed by a processor, implement the method according to any of claims 1 to 13.
